# EUROPÄISCHE PATENTANMELDUNG

(11) **EP 1 463 171 A1**
(43) Veröffentlichungstag der Anmeldung: **29.09.2004**
(21) Anmeldenummer: 04450022.1
(22) Anmeldetag: 04.02.2004
(51) Int. Cl.: H02B 13/02

(54) **Gekapselte elektrische Schaltzelle für Hochspannung**

(30) Priorität: 26.03.2003 AT 20903 U
(71) Anmelder: ALSTOM Austria AG, 4060 Leonding (AT)
(72) Erfinder: Höfer, Hermann, 4040 Linz (AT)
(74) Vertreter: Rossboth, Werner Heinz

(57) **Zusammenfassung**

Es wird eine gekapselte elektrische Schaltzelle 1 für Hochspannung mit mehreren gegeneinander geschotteten Räumen, wie Sammelschienen-, Leistungsschalter-, Kabelanschlussraum (3, 4, 5) und Niederspannungskästen (2, 21) beschrieben, wobei der Leistungsschalter (45) Gegenkontakte (41, 42) aufweist, die mit Trennkontakten in Eingriff bringbar sind. Der Leistungsschalter (45) ist im Leistungsschalterraum (4) fest montiert, und die Trennkontakte sind als Schaltstifte (31, 51) ausgebildet, welche durch koaxiale Öffnungen von Topfisolatoren (43, 44), die in der Schottwand (6) zwischen Sammelschienenraum (3) sowie Kabelanschlussraum (5) und Leistungsschalterraum (4) angeordnet sind, mit den Gegenkontakten (41, 42) des Leistungsschalters (45) in Eingriff bringbar sind, wozu die Schaltstifte (31) im Sammelschienenraum (3) einerseits und die Schaltsifte (51) im Kabelanschlussraum (5) andererseits, wie an sich bekannt, auf horizontal verschiebbaren Isolatoren (36, 56) montiert sind und über flexible Verbinder (32, 52) mit fixierten Anschlüssen (37, 57) der Sammelschienenabgangsleiter (33, 34, 35) bzw. Kabelabgangsleiter (58) elektrisch leitend verbunden sind.

## Beschreibung

Die Erfindung bezieht sich auf eine gekapselte elektrische Schaltzelle für Hochspannung mit mehreren gegeneinander geschotteten Räumen, wie Sammelschienen-, Leistungsschalter-, Kabelanschlussraum und Niederspannungskästen, wobei der Leistungsschalter Gegenkontakte aufweist, die mit Trennkontakten in Eingriff bringbar sind.

In einzelne Schotträume unterteilte gekapselte Schaltzeilen werden als geschottete Schaltzellen bezeichnet und weisen gemäß den geltenden internationalen Bestimmungen den höchsten Sicherheitsstandard auf, sodass sie zum Unterschied zu teilgeschotteten Schaltzellen auch ausserhalb elektrischer Betriebsstätten betrieben werden können.

Gekapselte Schaltzellen, bei denen eine Trennfunktion durch Verfahren des kompletten Leistungsschalters erfolgt, sind beispielsweise aus den AT-PS 397893, AT-GM 2759 und DE-PS 196 33 524 bekannt. Der Leistungsschalter ist bei diesen Ausführungsformen entweder auf einem Trennwagen oder Geräteeinschub montiert, der von einer Kontaktstellung in eine Trennstellung ausfahrbar ist.

Aus der AT-GM 5324 ist eine teilgeschottete Schaltzelle mit fest montiertem Leistungsschalter bekannt, der Gegenkontakte aufweist, die mit Trennkontakten in Eingriff bringbar sind. Die Trennkontakte sind auf horizontal verschiebbaren Isolatoren montiert und über flexible Verbinder jeweils mit fixierten Anschlüssen der Sammelschienenabgangsleiter oder Kabelabgangsleiter elektrisch leitend verbunden.

Durch die in der Folge aufgezeigte erfindungsgemäße Ausführung wird bezweckt, eine gekapselte elektrische Schaltzelle der eingangs genannten Art zu schaffen, die erhebliche Vereinfachungen hinsichtlich des apparativen Aufwandes und eine Minimierung der Außenabmessungen erlaubt und wirtschaftlich herstellbar ist.

Dies wird dadurch erreicht, dass der Leistungsschalter im Leistungsschalterraum fest montiert ist und die Trennkontakte als Schaltstifte ausgebildet sind, welche durch koaxiale Öffnungen von Topfisolatoren, die in der Schottwand zwischen Sammelschienenraum sowie Kabelanschlussraum und Leistungsschalterraum angeordnet sind, mit den Gegenkontakten des Leistungsschalters in Eingriff bringbar sind, wozu die Schaltstifte im Sammelschienenraum einerseits und die Schaltstifte im Kabelanschlussraum andererseits, wie an sich bekannt, auf horizontal verschiebbaren Isolatoren montiert sind und über flexible Verbinder mit fixierten Anschlüssen der Sammelschienenabgangsleiter bzw. Kabelabgangsleiter elektrisch leitend verbunden sind.

Mit Hilfe der verschiebbaren Isolatoren sind die Schaltstifte auf einfache Art in Trennstellung oder durch die koaxialen Topfisolatoröffnungen hindurch in Kontaktstellung mit den Leistungsschalter-Gegenkontakten zu bringen, ohne dass ein Verfahren des kompletten, relativ schweren Leistungsschalters erforderlich ist.

Bevorzugterweise sind die horizontal verschiebbaren Isolatoren im Sammelschienenraum schräg auf einem oberhalb der Schottwand seitlich geführten Querträger angeordnet, die horizontal verschiebbaren Isolatoren im Kabelanschlussraum dagegen schräg auf einem unterhalb der Schottwand seitlich geführten Querträger, wobei sich eine spiegelbildliche Anordnung ergibt, deren Symmetrieachse die Schottwand bildet. Durch die spiegelbildliche, V-förmige Anordnung der horizontal verschiebbaren Isolatoren auf den seitlich geführten Querträgern ober- und unterhalb der Schottwand wird eine besonders einfache, platzsparende Ausführung erreicht.

Beide Querträger stehen mit einem Kniehebelsystem in Wirkverbindung, wodurch eine gemeinsame Verschiebung der Querträger erfolgen kann.

Das Kniehebelsystem kann so ausgebildet sein, dass sich nach Kontakteingriff der Schaltstifte in den Gegenkontakten des Leistungsschalters eine Totpunktlage der vier Hebel des Kniehebelsystems ergibt. Die Schaltstifte sind dadurch in ihrer Kontakteingriffslage fixiert und gegen Kurzschlusskräfte gesichert.

Zum Schutz gegen zufälliges Berühren unter Spannung stehender Schaltstifte in Trennstellung sind die dem Leistungsschalterraum zugewandten Öffnungen der Topfisolatoren mittels kulissengeführter Schutzplatten abgedeckt.

Die Schaltstifte können einen Rund- oder Rohrquerschnitt aufweisen.

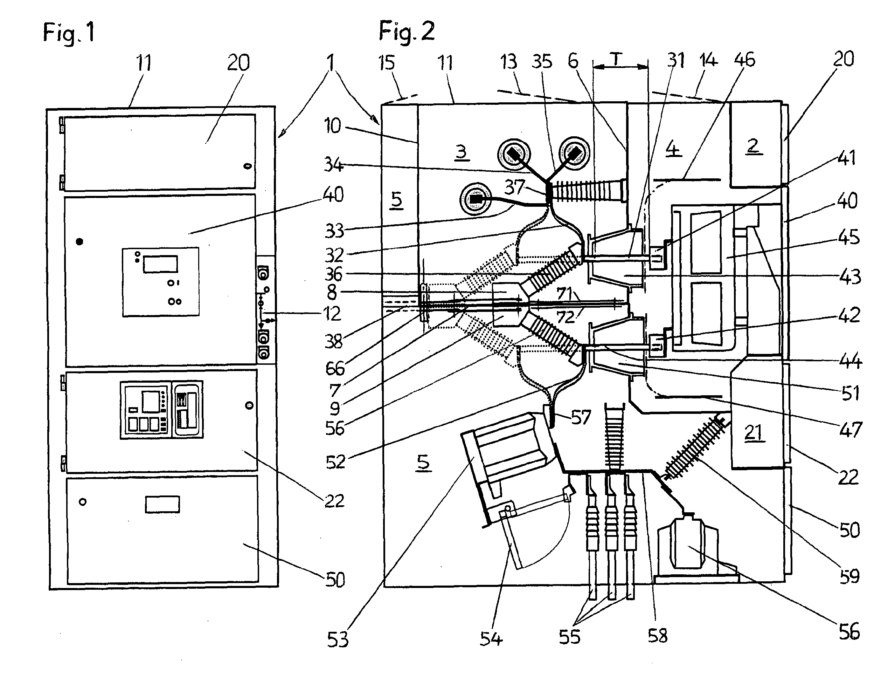

Nachfolgend wird anhand der beiliegenden Zeichnung ein Ausführungsbeispiel des Erfindungsgegenstandes näher erläutert: Es zeigen Fig. 1 die Frontansicht einer dreipoligen geschotteten Schaltzelle für Hochspannung, beispielsweise 36 kV, und Fig. 2, die schematische Schnittdarstellung dieser Schaltzelle.

Die geschottete Schaltzelle 1 besitzt eine äußere Kapselung 11, die aus Metallblechteilen zusammengesetzt ist. Der innere Raum der Schaltzelle 1 ist in fünf gegeneinander geschottete Räume, den Sammelschienenraum 3, Leistungsschalterraum 4, Kabelanschlussraum 5 zur Energieverteilung und zwei Niederspannungskästen 2, 21 unterteilt, wie aus Fig. 2 ersichtlich ist.

Die Räume 4, 5 und Niederspannungskästen 2, 21 sind von der Bedienungsseite der Schaltzelle 1 aus über Paneele 20, 22, 40, 50 zugänglich. Die Paneele 40, 50 sind als druckfest verriegelbare Türpaneele ausgebildet, damit im Falle eines Störlichtbogens im Leistungsschalterraum 4 bzw. Kabelanschlussraum 5 Bedienungspersonal nicht gefährdet ist.

Aus der in Fig. 1 gezeichneten Frontansicht der Schaltzelle 1 erkennt man, dass die Türpaneele 40, 50 Sichtfenster aufweisen, wodurch eine visuelle Kontrolle der Hochspannungsgeräte, Leistungsschalter 45, Erdungsschalter 54, Messwandler 53, 56 und Überspannungsableiter 59 (Fig. 2), möglich ist. Neben der rechten Seite des Türpaneels 40 ist ein Blindschaltbild 12 mit Stellungsmeldern zur Anzeige der Schaltzustände angebracht. Im Bereich des Blindschaltbildes 12 sind auch die Wellenenden der Kurbelantriebe mechanisch bewegbarer Teile im Inneren der Schotträume 3, 4, 5 herausgeführt und gegenseitig verriegelt.

In Fig. 2 ist die geschottete Schaltzelle 1 schematisch im Schnitt dargestellt. Hinter dem Türpaneel 40 ist der als Einheit ausgeführte dreipolige Vakuum-Leistungsschalter 45 mit seinem Antrieb und den Gegenkontakten 41, 42 montiert und mit Metallblechteilen der äußeren Kapselung 11 fest verbunden. Die tulpenförmigen Gegenkontakte 41, 42 befinden sich gerade im Kontakteingriff mit den Schaltstiften 31, 51, die einen Rundquerschnitt aufweisen und auf schräg angeordneten Isolatoren 36, 56 fest montiert sind.

Die vorzugsweise aus Gießharz hergestellten, horizontal verschiebbaren Isolatoren 36 im Sammelschienenraum 3 sind schräg auf einem oberhalb der horizontalen Schottwand 7 seitlich geführten Querträger 8 angeordnet, die horizontal verschiebbaren Isolatoren 56 im Kabelanschlussraum 5 dagegen schräg auf einem unterhalb der Schottwand 7 seitlich geführten Querträger 9, wodurch sich eine spiegelbildliche Anordnung ergibt, deren Symmetrieachse die Schottwand 7 bildet.

Beide seitlich an der äußeren Kapselung 11 geführten Querträger 8, 9 stehen mit einem Kniehebelsystem 66 in Wirkverbindung. Das Kniehebelsystem 66 ist entweder über einen Handkurbelantrieb oder einen elektrischen Getriebemotor zu betätigen. Bei der in Fig. 2 gezeichneten Stellung befinden sich die drei Schaltstiftpaare 31, 51 in Kontakteingriff mit den zugeordneten Gegenkontakten 41, 42 des dreipoligen Vakuum-Leistungsschalters 45. Im eingeschalteten Zustand des Vakuum-Leistungsschalters 45 ist somit eine elektrische Verbindung vom dreiphasigen Sammelschienensystem über die Sammelschienenabgangsleiter 33, 34, 35, fixierten Anschlüsse 37, flexiblen Verbinder 32, Schaltstifte 31, Gegenkontakte 41, Vakuum-Leistungsschalter 45, Gegenkontakte 42, Schaltstifte 51, flexiblen Verbinder 52, fixierte Anschlüsse 57 und Kabelabgangsleiter 58 zu den Kabelabgängen 55 zur Energieverteilung hergestellt.

Zur Erhöhung der dielektrischen Festigkeit der Distanzen zwischen den Schaltstiftbefestigungen an den horizontal verschiebbaren Isolatoren 36, 56 und der geerdeten Schottwand 7 können an der Schottwand 7 im Sammelschienenraum 3 sowie Kabelanschlussraum 5 jeweils Isolierplatten 71, 72 distanziert befestigt sein. Um im Falle eines Störlichtbogens in einem der Schotträume 3, 4, 5 einen Druckabbau zu erreichen, können in der oberen äußeren Kapselung 11 Druckentlastungsklappen 13, 14, 15 vorgesehen sein.

Im ausgeschalteten Zustand des Vakuum-Leistungsschalters 45 kann das Kniehebelsystem 66 aktiviert werden. Die seitlich geführten Querträger 8, 9 verschieben sich in der Folge horizontal entlang der Schottwand 7 gegen die Rückwand der äußeren Kapselung 11, wobei die vier Hebel des Kniehebelsystems 66 aus ihrer Totpunktlage in die strichliert gezeichnete Winkelstellung gelangen. Im Bereich der Schaltwelle und Hebel des Kniehebelsystems 66 ist die hintere Schottwand 10 des Sammelschienenraumes 3 durchbrochen, wobei dieser Durchbruch in einen Blechkanal 38 zwischen Schottwand 10 und äußerer Kapselung 11 mündet, um eine Strömungsverbindung zwischen Sammelschienenraum 3 und Kabelanschlussraum 5 zu vermeiden.

Mit den Querträgern 8, 9 verschieben sich auch die Isolatoren 36, 56 und Schaltstifte 31, 51 gegen die Rückwand der äußeren Kapselung 11, wodurch zwischen den Schaltstiftenden und tulpenförmigen Gegenkontakten 41, 42 ein als Trennstrecke T bezeichneter Sicherheitsabstand entsteht. Die Schaltstifte 31, 51 sind in koaxialen Öffnungen der Topfisolatoren 43, 44 geführt, die in der Schottwand 6 zwischen Sammelschienenraum 3 sowie Kabelanschlussraum 5 und Leistungsschalterraum 4 angeordnet sind. Haben die Querträger 8, 9 ihre rückwärtige, punktiert gezeichnete Endstellung bzw. die Schaltstifte 31, 51 ihre Trennstellung erreicht, werden die dem Leistungsschalterraum 4 zugewandten Öffnungen der Topfisolatoren 43, 44 mittels kulissengeführter Schutzplatten 46, 47 abgedeckt. Zur Betätigung der Schutzplatten 46, 47 kann eine Hebelmechanik mit elektromotorischem Antrieb vorgesehen sein.

Es versteht sich von selbst, dass der Antrieb des Vakuum-Leistungsschalters 45, Erdungsschalter 54, Kniehebelsystem 66 und der Schutzplatten 46, 47 gegeneinander elektrisch und/oder mechanisch verriegelt und damit gegen Fehlschaltungen gesichert sind. Anstelle des dreipoligen Vakuum-Leistungsschalters 45 kann auch ein Leistungsschalter mit anderem Lichtbogen-Löschsystem, Lastschalter oder Lasttrennschalter montiert sein.

Die Sammelschienen und Sammelschienenabgangsleiter 33, 34, 35 können teilisoliert sein um eine gedrängtere Ausführung zu ermöglichen und das Wandern eines eventuell auftretenden Störlichtbogens zu verhindern.

Der obere Niederspannungskasten 2 dient zur Unterbringung der Antriebssteuerungen und/oder Motorantriebe. Im unteren Niederspannungskasten 21 bzw. im Paneel 22 sind Befehls-, Anzeige- und Steuerelemente des Schutz- und Leitsystems untergebracht. Gekapselte elektrische Schaltzellen der angeführten Art weisen etwa eine Kapselungshöhe von 2,5 m auf. Der Niederspannungskasten 21, 22 befindet sich daher in günstiger Sicht- und Bedienungshöhe.

## Patentansprüche

1. Gekapselte elektrische Schaltzelle für Hochspannung mit mehreren gegeneinander geschotteten Räumen wie Sammelschienen-, Leistungsschalter-, Kabelanschlussraum und Niederspannungskästen, wobei der Leistungsschalter Gegenkontakte aufweist, die mit Trennkontakten in Eingriff bringbar sind, **dadurch gekennzeichnet, dass** der Leistungsschalter (45) im Leistungsschalterraum (4) fest montiert ist und die Trennkontakte als Schaltstifte (31, 51) ausgebildet sind, welche durch koaxiale Öffnungen von Topfisolatoren (43, 44), die in der Schottwand (6) zwischen Sammelschienenraum (3) sowie Kabelanschlussraum (5) und Leistungsschalterraum (4) angeordnet sind, mit den Gegenkontakten (41, 42) des Leistungsschalters (45) in Eingriff bringbar sind, wozu die Schaltstifte (31) im Sammelschienenraum (3) einerseits und die Schaltstifte (51) im Kabelanschlussraum (5) andererseits, wie an sich bekannt, auf horizontal verschiebbaren Isolatoren (36; 56) montiert sind und über flexible Verbinder (32; 52) mit fixierten Anschlüssen (37; 57) der Sammelschienenabgangsleiter (33, 34, 35) bzw. Kabelabgangsleiter (58) elektrisch leitend verbunden sind.

2. Gekapselte elektrische Schaltzelle nach Anspruch 1, **dadurch gekennzeichnet, dass** die horizontal verschiebbaren Isolatoren (36) im Sammelschienenraum (3) schräg auf einem oberhalb der Schottwand (7) seitlich geführten Querträger (8) angeordnet sind, die horizontal verschiebbaren Isolatoren (56) im Kabelanschlussraum 85) dagegen schräg auf einem unterhalb der Schottwand (7) seitlich geführten Querträger (9), wobei sich eine spiegelbildliche Anordnung ergibt, deren Symmetrieachse die Schottwand (79) bildet.

3. Gekapselte elektrische Schaltzelle nach Anspruch 1 oder 2, **dadurch gekennzeichnet, dass** die Querträger (8, 9) mit einem Kniehebelsystem (66) in Wirkverbindung stehen.

4. Gekapselte elektrische Schaltzelle nach einem der Ansprüche 1 bis 3, **dadurch gekennzeichnet, dass** sich nach Kontakteingriff der Schaltstifte (31, 51) in den Gegenkontakten (41, 42) des Leistungsschalters (45) eine Totpunktlage der vier Hebel des Kniehebelsystems (66) ergibt.

5. Gekapselte elektrische Schaltzelle nach einem der Ansprüche 1 bis 4, **dadurch gekennzeichnet, dass** zum Schutz gegen zufälliges Berühren unter Spannung stehender Schaltstifte (31, 51) in Trennstellung, die dem Leistungsschalterraum (4) zugewandten Öffnungen der Topfisolatoren (43, 44) mittels kulissengeführter Schutzplatten (46, 47) abgedeckt sind.

6. Gekapselte elektrische Schaltzelle nach einem der Ansprüche 1 bis 5, **dadurch gekennzeichnet, dass** die Schaltstifte (31, 51) einen Rund- oder Rohrquerschnitt aufweisen.
